(19) Europäisches Patentamt
European Patent Office
Office européen des brevets

(11) **EP 4 693 116 A1**

(12) **EUROPEAN PATENT APPLICATION**

(43) Date of publication:
**11.02.2026 Bulletin 2026/07**

(21) Application number: **25187813.8**

(22) Date of filing: **07.07.2025**

(51) International Patent Classification (IPC):
**G06N 10/40** $^{(2022.01)}$

(52) Cooperative Patent Classification (CPC):
**G06N 10/40**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **08.08.2024 JP 2024131789**

(71) Applicant: **FUJITSU LIMITED
Kawasaki-shi, Kanagawa 211-8588 (JP)**

(72) Inventor: **SEKINE, Akihiko
Kawasaki-shi, 211-8588 (JP)**

(74) Representative: **Haseltine Lake Kempner LLP
Cheapside House
138 Cheapside
London EC2V 6BJ (GB)**

(54) **QUANTUM TRANSDUCER AND QUANTUM TRANSDUCTION METHOD**

(57) A quantum transducer includes a three-dimensional cavity resonator; an object disposed in the three-dimensional cavity resonator and including an antiferromagnetic insulator having an easy axis of magnetization along a first axis; and a microwave transceiver configured to transmit and receive a microwave to and from the object. Laser light is emitted to the object from a direction inclined with respect to the first axis.

## FIG.1

**Description**

FIELD

The present disclosure relates to a quantum transducer and a quantum transduction method.

BACKGROUND

In quantum computers, quantum transduction between microwave photons and optical photons is often performed. Further, quantum transducers including ferromagnetic materials have been proposed.

Quantum computers include quantum bits (qubits). If a quantum transducer including a ferromagnetic material is used, qubits may be affected by a magnetic field generated by the ferromagnetic material.

An object of the present disclosure is to provide a quantum transducer and a quantum transduction method, in which an influence of a magnetic field to the outside can be reduced.

RELATED-ART DOCUMENTS

PATENT DOCUMENTS

[Patent Document 1] Japanese Laid-open Patent Publication No. 2019-512161
[Patent Document 2] Japanese Laid-open Patent Publication No. 2022-538247
[Patent Document 3] Japanese Laid-open Patent Publication No. 2021-536090
[Patent Document 4] U.S. Patent Application Publication No. 2019/0019099

SUMMARY

According to one embodiment of the present disclosure, a quantum transducer includes a three-dimensional cavity resonator; an object disposed in the three-dimensional cavity resonator and including an antiferromagnetic insulator having an easy axis of magnetization along a first axis; and a microwave transceiver configured to transmit and receive a microwave to and from the object. Laser light is emitted to the object from a direction inclined with respect to the first axis.

According to one embodiment of the present disclosure, an influence of a magnetic field to the outside can be reduced.

BRIEF DESCRIPTION OF DRAWINGS

FIG. 1 is a schematic view illustrating a quantum transducer according to a first embodiment;
FIG. 2 is a schematic diagram illustrating the theory of quantum transduction by the quantum transducer according to the first embodiment;
FIG. 3 is a graph illustrating the relationship between a magnetic field in an antiferromagnetic insulator and resonant frequencies;
FIG. 4 is a schematic view illustrating a quantum transducer according to a second embodiment;
FIG. 5 is a schematic view illustrating a quantum transducer according to a third embodiment;
FIG. 6 is a schematic diagram illustrating the theory of quantum transduction by the quantum transducer according to the third embodiment; and
FIG. 7 is a schematic view illustrating a quantum transducer according to a fourth embodiment.

DESCRIPTION OF EMBODIMENTS

In the following, embodiments of the present disclosure will be described in detail with reference to the accompanying drawings. In the specification and the drawings, components having substantially the same functional configuration are denoted by the same reference numeral, and a redundant description thereof may be omitted.

(First Embodiment)

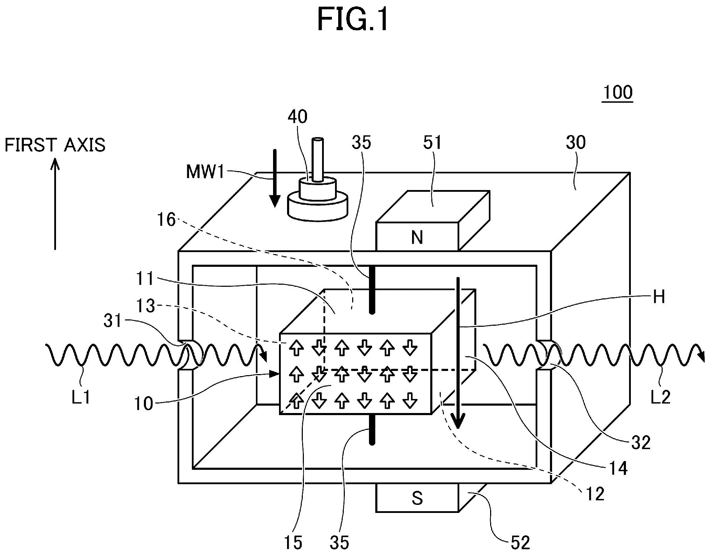

A first embodiment will be described. The first embodiment relates to a quantum transducer. The quantum transducer according to the first embodiment converts microwave photons into optical photons. FIG. 1 is a schematic view illustrating the quantum transducer according to the first embodiment.

As illustrated in FIG. 1, a quantum transducer 100 according to the first embodiment includes a microwave resonator 30, an object 10 including an antiferromagnetic insulator, an N-pole 51, an S-pole 52, and an antenna 40.

The microwave resonator 30 includes an inlet 31 and an outlet 32. The object 10 is fixed to the inside of the microwave resonator 30 by a support member 35. An optical fiber is connected to the inlet 31, laser light L1 is introduced from the outside through the inlet 31, and the laser light L1 is emitted toward the object 10. The optical fiber is connected to the outlet 32, and laser light L2 transmitted through the object 10 is guided to the outside through the outlet 32. Each of the laser light L1 and the laser light L2 is linearly polarized laser light. The laser light L1 and the laser light L2 have components perpendicular to an easy axis of magnetization of the antiferromagnetic insulator included in the object 10. The microwave resonator 30 is an example of a three-dimensional cavity resonator.

The object 10 has a three-dimensional shape such as a rectangular parallelepiped shape. The length of each side of the object 10 is, for example, approximately 1 $\mu$m to 1 mm. The object 10 has a first surface 11, a second surface 12, a third surface 13, a fourth surface 14, a fifth surface 15, and a sixth surface 16. The first surface 11 and the second surface 12 are parallel to each other, the third surface 13 and the fourth surface 14 are parallel to each other, and the fifth surface 15 and the sixth surface 16 are parallel to each other. The third surface 13 faces the inlet 31, and the fourth surface 14 faces the outlet 32. The laser light L1 is emitted to the third surface 13 of the object 10, and the laser light L2 exits from the fourth surface 14. The object 10 includes the antiferromagnetic insulator, and the antiferromagnetic insulator has the easy axis of magnetization along a first axis that is perpendicular to the first surface 11 and the second surface 12. The antiferromagnetic insulator includes, for example, $\alpha$-Fe$_2$O$_3$, MnF$_2$, FeF$_2$, NiO, or any combination thereof. In FIG. 1, arrows in the object 10 indicate the directions of spins in the antiferromagnetic insulator.

The N-pole 51 and the S-pole 52 are provided on outer wall surfaces of the microwave resonator 30. The N-pole 51 faces the first surface 11, and the S-pole 52 faces the second surface 12. A magnetic field H directed from the N-pole 51 to the S-pole 52 is generated between the N-pole 51 and the S-pole 52. The N-pole 51 and the S-pole 52 serve as a magnetic field applicator configured to apply, to the object 10, the magnetic field H having a component parallel to the first axis.

The antenna 40 is provided on the outer wall surface of the microwave resonator 30. The antenna 40 serves as a microwave transceiver configured to transmit and receive a microwave to and from the object 10. In the present embodiment, the antenna 40 transmits, to the object 10, a microwave MW1 input from the outside.

The polarization and the like of the laser light L2 guided to the outside through the outlet 32 are detected. In this manner, microwave photons of the microwave MW1 emitted to the object 10 through the antenna 40 are converted into optical photons. That is, a quantum transduction method using the quantum transducer 100 includes a process of emitting the laser light L1 to the object 10 from a direction inclined with respect to the first axis. For example, microwave photons with frequencies of about 1 GHz to 100 GHz are converted into optical photons with a frequency of about 200 THz.

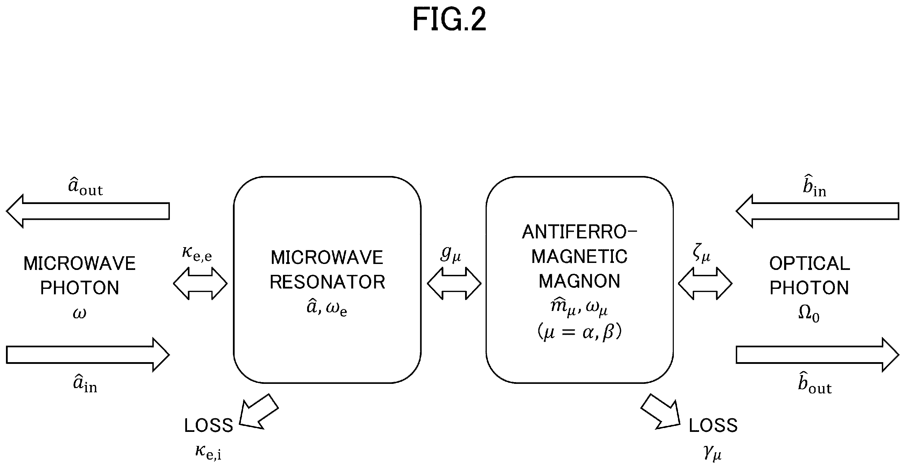

The theory of quantum transduction by the quantum transducer 100 will be described. FIG. 2 is a schematic diagram illustrating the theory of quantum transduction by the quantum transducer 100 according to the first embodiment. Parameters in FIG. 2 represent items illustrated in Table 1.

[Table 1]

| | |
|---|---|
| $\hat{a}_{\text{in}}$ : | ANNIHILATION OPERATOR OF ITINERANT MICROWAVE PHOTONS (INPUT) |
| $\hat{a}_{\text{out}}$ : | ANNIHILATION OPERATOR OF ITINERANT MICROWAVE PHOTONS (OUTPUT) |
| $\hat{b}_{\text{in}}$ : | ANNIHILATION OPERATOR OF ITINERANT OPTICAL PHOTONS (INPUT) |
| $\hat{b}_{\text{out}}$ : | ANNIHILATION OPERATOR OF ITINERANT OPTICAL PHOTONS (OUTPUT) |
| $\hat{a}$ : | ANNIHILATION OPERATOR OF PHOTONS IN MICROWAVE RESONATOR |
| $\hat{m}_{\alpha}, \hat{m}_{\beta}$ : | ANNIHILATION OPERATOR OF ANTIFERROMAGNETIC MAGNONS |
| $\omega_{\text{e}}$ : | RESONANT FREQUENCY OF MICROWAVE RESONATOR |
| $\omega_{\alpha}, \omega_{\beta}$ : | RESONANT FREQUENCY OF ANTIFERROMAGNETIC INSULATOR |
| $\omega$ : | FREQUENCY OF ITINERANT MICROWAVE PHOTONS |
| $\Omega_0$ : | FREQUENCY OF ITINERANT OPTICAL PHOTONS |
| $\kappa_{e,e}$ : | INTERACTION BETWEEN ITINERANT MICROWAVE PHOTONS AND PHOTONS IN MICROWAVE RESONATOR |
| $K_{\text{e,i}}$ : | DISSIPATION RATE OF MICROWAVE RESONATOR |

(continued)

| | |
|---|---|
| $g_\alpha, g_\beta$ : | INTERACTION BETWEEN PHOTONS IN MICROWAVE RESONATOR AND ANTIFERROMAGNETIC MAGNONS |
| $\gamma_a, \gamma_\beta$ : | DISSIPATION RATE OF ANTIFERROMAGNETIC MAGNONS (ANTIFERROMAGNETIC RESONANCE STATE) |
| $\zeta_\alpha, \zeta_\beta$ : | INTERACTION BETWEEN ITINERANT OPTICAL PHOTONS AND ANTIFERROMAGNETIC MAGNONS |

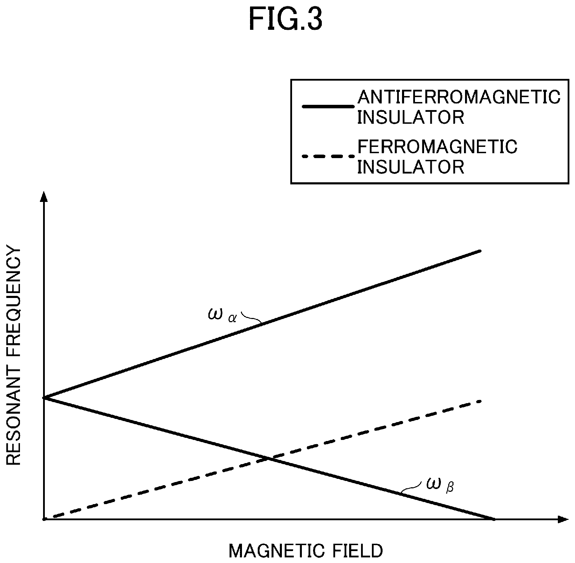

With respect to the resonant frequencies $\omega_\alpha$ and $\omega_\beta$, the relationship between the magnetic field in the antiferromagnetic insulator and the resonant frequencies $\omega_\alpha$ and $\omega_\beta$ is illustrated in FIG. 3. As illustrated in FIG. 3, when the magnetic field is zero, the resonant frequencies $\omega_\alpha$ and $\omega_\beta$ are equal to each other, and as the magnetic field becomes stronger, the resonant frequency $\omega_\alpha$ becomes larger and the resonant frequency $\omega_\beta$ becomes smaller. The resonant frequencies $\omega_\alpha$ and $\omega_\beta$ when the magnetic field is zero are about several hundred GHz. FIG. 3 also illustrates characteristics of a ferromagnetic insulator. In the case of the ferromagnetic insulator, when the magnetic field is zero, the resonant frequency is zero and the ferromagnetic insulator does not resonate. Further, while the ferromagnetic insulator has only one resonant frequency for one magnetic field, the antiferromagnetic insulator has two resonant frequencies for one magnetic field. Therefore, in the antiferromagnetic insulator, resonance can occur in a wider frequency range than in the ferromagnetic insulator.

In the quantum transduction illustrated in FIG. 2, equations of motion represented by equations (1) and (2) are established. Parameters in the equations (1) and (2) represent items illustrated in Table 2. Further, $\kappa_e$ in the equation (1) is represented by equation (3).

[Math. 1]

$$\dot{\hat{a}} = \frac{i}{\hbar}\left[H_{\text{total}}, \hat{a}\right] - \frac{\kappa_e}{2}\hat{a} - \sqrt{\kappa_{e,e}}\hat{a}_{\text{in}} = -i\omega_e\hat{a} - i\sum_\mu g_\mu\hat{m}_\mu - \frac{\kappa_e}{2}\hat{a} - \sqrt{\kappa_{e,e}}\hat{a}_{\text{in}}, \qquad (1)$$

$$\dot{\hat{m}}_\mu = \frac{i}{\hbar}\left[H_{\text{total}}, \hat{m}_\mu\right] - \frac{\gamma_\mu}{2}\hat{m}_\mu - \sqrt{\zeta_\mu}\hat{b}_{\text{in}} = -i\omega_\mu\hat{m}_\mu - ig_\mu\hat{a} - iG_{\text{mm}}\hat{m}_{\mu'} - \frac{\gamma_\mu}{2}\hat{m}_\mu - \sqrt{\zeta_\mu}\hat{b}_{\text{in}}, \quad (\mu \neq \mu') \quad (2)$$

$$\kappa_e = \kappa_{e,e} + \kappa_{e,i} \qquad (3)$$

[Table 2]

| | |
|---|---|
| $H_{\text{total}}$ : | HAMILTONIAN OF ENTIRE SYSTEM |
| $G_{\text{mm}}$ : | MAGNON-MAGNON INTERACTION BETWEEN ANTIFERROMAGNETIC MAGNONS |

In the present embodiment, a Hamiltonian $H_{\text{total}}$ of the entire system is the sum of a Hamiltonian of photons in the microwave resonator 30, a Hamiltonian of antiferromagnetic magnons, and a Hamiltonian representing the interaction between the photons in the microwave resonator 30 and the antiferromagnetic magnons.

When the equations of motion represented by the equations (1) and (2) are solved by using an input-output formalism, equation (4) representing transduction efficiency $\eta$ is obtained. Microwave susceptibility $\chi_e$ and magnon susceptibility $\chi_\mu$ in the equation (4) are represented by equations (5) and (6), respectively.

[Math. 2]

$$\eta = \left|\frac{\langle\hat{b}_{\text{out}}\rangle}{\langle\hat{a}_{\text{in}}\rangle}\right|^2 = \left|\frac{\chi_e\sqrt{\kappa_{e,e}}\left[g_\beta\chi_\beta\left(\sqrt{\zeta_\alpha}G_{\text{mm}}\chi_\alpha + i\sqrt{\zeta_\beta}\right) + g_\alpha\chi_\alpha\left(\sqrt{\zeta_\beta}G_{\text{mm}}\chi_\beta + i\sqrt{\zeta_\alpha}\right)\right]}{g_\alpha^2\chi_\alpha\chi_e + g_\beta^2\chi_\beta\chi_e - 2ig_\alpha g_\beta G_{\text{mm}}\chi_\alpha\chi_\beta\chi_e + G_{\text{mm}}^2\chi_\alpha\chi_\beta + 1}\right|^2 \quad (4)$$

$$\chi_e = \left[i(\omega - \omega_e) - (\kappa_{e,e} + \kappa_{e,i})/2\right]^{-1} \qquad (5)$$

$$\chi_\mu = \left[i(\omega - \omega_\mu) - \gamma_\mu/2\right]^{-1} \quad (\mu = \alpha, \beta) \qquad (6)$$

When resonance conditions are satisfied, that is, when the frequency $\omega$ of itinerant microwave photons, the resonant frequency $\omega_e$ of the microwave resonator 30, and the resonant frequency $\omega_\beta$ of the antiferromagnetic insulator are equal to one another, and the magnon-magnon interaction $G_{mm}$ is 0, the transduction efficiency $\eta$ is represented by equation (7).

[Math. 3]

$$\eta = \left| \frac{\langle \hat{b}_{\text{out}} \rangle}{\langle \hat{a}_{\text{in}} \rangle} \right|^2 = \left| \frac{\chi_e \sqrt{\kappa_{e,e}} \left( \sqrt{\zeta_\alpha} g_\alpha \chi_\alpha + \sqrt{\zeta_\beta} g_\beta \chi_\beta \right)}{g_\alpha^2 \chi_\alpha \chi_e + g_\beta^2 \chi_\beta \chi_e + 1} \right|^2 \qquad (7)$$

For example, when $\zeta_\beta/2\pi$ is about 3 $\mu$Hz, $g_\beta/2\pi$ is about 400 MHz, $\kappa_{e,i}/2\pi$ is about 200 MHz, $\kappa_{e,e}/2\pi$ is about 200 MHz, and $\gamma_\beta/2\pi$ is about 70 MHz, the transduction efficiency $\eta$ is about $10^{-15}$. In this manner, the quantum transducer 100 can convert microwave photons of the microwave MW1 into optical photons.

Further, because the object 10 includes the antiferromagnetic insulator, even when a quantum device including qubits and the like is disposed in the vicinity of the quantum transducer 100, the quantum device can be prevented from being affected by the magnetic field from the object 10.

Further, as illustrated in FIG. 3, the antiferromagnetic insulator can resonate even when the magnetic field is zero. Therefore, depending on the resonant frequency of a qubit resonating with the quantum transducer 100, the N-pole 51 and the S-pole 52 are not necessarily provided, or the magnetic field H generated by the N-pole 51 and the S-pole 52 may be small. Therefore, an influence on the quantum device caused by the N-pole 51 and the S-pole 52 can be reduced.

The shape of the object 10 is not limited to a rectangular parallelepiped shape, and may be a spherical shape or the like.

(Second Embodiment)

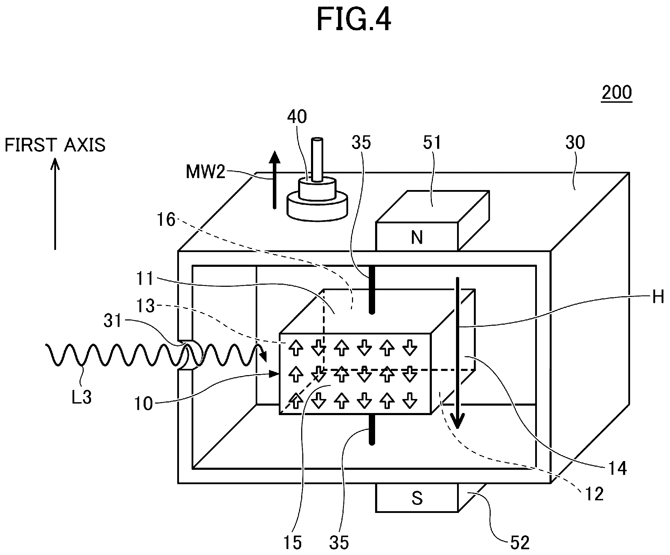

A second embodiment will be described. The second embodiment relates to a quantum transducer. The quantum transducer according to the second embodiment converts optical photons into microwave photons. FIG. 4 is a schematic view illustrating the quantum transducer according to the second embodiment.

As illustrated in FIG. 4, in a quantum transducer 200 according to the second embodiment, laser light L3 is emitted from the outside toward the object 10 through the inlet 31. The laser light L3 is emitted to the third surface 13 of the object 10. The outlet 32 is not necessarily provided. The laser light L3 includes two kinds of linearly polarized laser beams having deflection angles orthogonal to each other. The two kinds of linearly polarized laser beams have components perpendicular to the easy axis of magnetization of the antiferromagnetic insulator included in the object 10.

The other configurations of the second embodiment are the same as those of the first embodiment.

In the second embodiment, a microwave MW2 corresponding to the polarization of the laser light L3 is emitted from the object 10, and the antenna 40 outputs the microwave MW2 to the outside. In this manner, optical photons of the laser light L3 emitted to the object 10 are converted into microwaves photons of the microwave MW2. That is, a quantum transduction method using the quantum transducer 200 includes a process of emitting the laser light L3 to the object 10 from a direction inclined with respect to the first axis. For example, optical photons with a frequency of about 200 THz are converted into microwave photons with frequencies of about 1 GHz to 100 GHz.

According to the second embodiment, the same effects as in the first embodiment can be obtained.

(Third Embodiment)

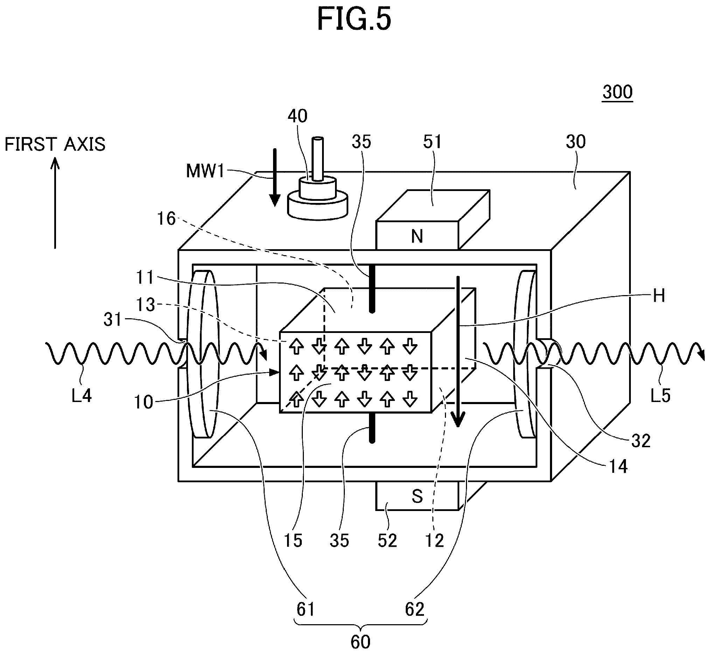

A third embodiment will be described. The third embodiment differs from the first embodiment mainly in that an optical resonator is included. FIG. 5 is a schematic view illustrating a quantum transducer according to the third embodiment.

As illustrated in FIG. 5, a quantum transducer 300 according to the third embodiment includes an optical resonator 60. The optical resonator 60 includes a first mirror 61 and a second mirror 62. The first mirror 61 is provided between the inlet 31 and the object 10, and the second mirror 62 is provided between the outlet 32 and the object 10.

An optical fiber is connected to the inlet 31, and laser light L4 is emitted toward the object 10 from the outside through the inlet 31. The optical fiber is connected to the outlet 32, and laser light L5 transmitted through the object 10 is guided to the outside through the outlet 32. The laser light L4 is emitted to the third surface 13 of the object 10, and the laser light L5 exits from the fourth surface 14. Each of the laser light L4 and the laser light L5 is circularly polarized laser light. The laser light L4 and the laser light L5 have components perpendicular to the easy axis of the antiferromagnetic insulator included in the object 10. The optical resonator 60 amplifies the circularly polarized laser light.

The other configurations of the third embodiment are the same as those of the first embodiment.

The polarization and the like of the laser light L5 guided to the outside through the outlet 32 are detected. In this manner, microwave photons of a microwave MW1 emitted to the object 10 through the antenna 40 are converted into optical photons. That is, a quantum transduction method using the quantum transducer 300 includes a process of emitting the laser light L4 to the object 10 from a direction inclined with respect to the first axis. For example, microwave photons with frequencies of about 1 GHz to 100 GHz are converted into optical photons with a frequency of about 200 THz.

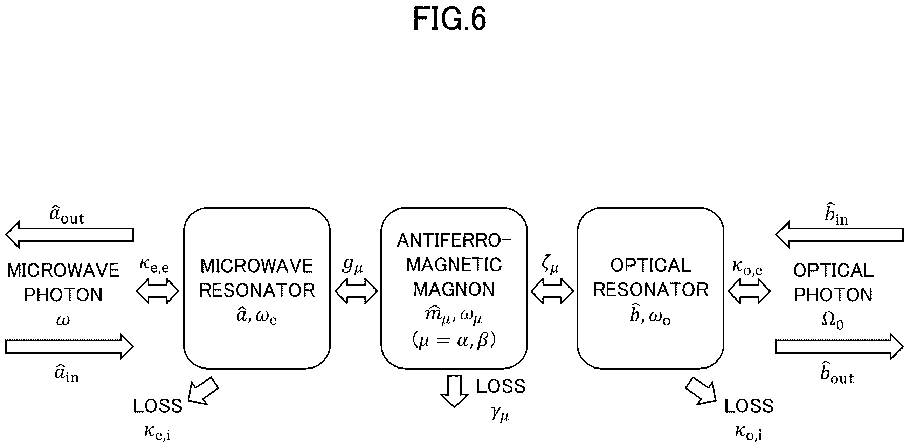

The theory of quantum transduction by the quantum transducer 300 will be described. FIG. 6 is a schematic diagram illustrating the theory of quantum transduction by the quantum transducer 300 according to the third embodiment. Parameters in FIG. 6 represent items illustrated in Table 3.

[Table 3]

| | |
|---|---|
| $\omega_\text{o}$ : | RESONANT FREQUENCY OF OPTICAL RESONATOR |
| $\kappa_\text{o,i}$ : | DISSIPATION RATE OF OPTICAL RESONATOR |
| $\kappa_\text{o,e}$ : | INTERACTION BETWEEN ITINERANT OPTICAL PHOTONS AND PHOTONS IN OPTICAL RESONATOR |
| $\zeta_\alpha, \zeta_\beta$ : | INTERACTION BETWEEN PHOTONS IN OPTICAL RESONATOR AND ANTIFERROMAGNETIC MAGNONS |
| $\hat{b}$ : | ANNIHILATION OPERATOR OF PHOTONS IN OPTICAL RESONATOR |

In the quantum transduction illustrated in FIG. 6, equations of motion represented by equations (8) to (10) are established. Further, $\kappa_\text{o}$, in the equation (10) is represented by equation (11).

[Math. 4]

$$\dot{\hat{a}} = \frac{i}{\hbar}\left[H_\text{total}, \hat{a}\right] - \frac{\kappa_\text{e}}{2}\hat{a} - \sqrt{\kappa_\text{e,e}}\hat{a}_\text{in} = -i\omega_\text{e}\hat{a} - i\sum_\mu g_\mu \hat{m}_\mu - \frac{\kappa_\text{e}}{2}\hat{a} - \sqrt{\kappa_\text{e,e}}\hat{a}_\text{in} \tag{8}$$

$$\dot{\hat{m}}_\mu = \frac{i}{\hbar}\left[H_\text{total}, \hat{m}_\mu\right] - \frac{\gamma_\mu}{2}\hat{m}_\mu = -i\omega_\mu \hat{m}_\mu - ig_\mu \hat{a} - i\zeta_\mu \hat{b} - iG_\text{mm}\hat{m}_{\mu'} - \frac{\gamma_\mu}{2}\hat{m}_\mu \quad (\mu \neq \mu') \tag{9}$$

$$\dot{\hat{b}} = \frac{i}{\hbar}\left[H_\text{total}, \hat{b}\right] - \frac{\kappa_\text{o}}{2}\hat{b} - \sqrt{\kappa_\text{o,e}}\hat{b}_\text{in} = -i\omega_\text{o}\hat{b} - i\sum_\mu \zeta_\mu \hat{m}_\mu - \frac{\kappa_\text{o}}{2}\hat{b} - \sqrt{\kappa_\text{o,e}}\hat{b}_\text{in} \tag{10}$$

$$\kappa_\text{o} = \kappa_\text{o,e} + \kappa_\text{o,i} \tag{11}$$

In the present embodiment, a Hamiltonian $H_\text{total}$ of the entire system is the sum of a Hamiltonian of photons in the microwave resonator 30, a Hamiltonian of antiferromagnetic magnons, a Hamiltonian representing the interaction between the photons in the microwave resonator 30 and the antiferromagnetic magnons, a Hamiltonian representing the interaction between photons in the optical resonator 60 and the antiferromagnetic magnons, and a Hamiltonian of the photons in the optical resonator 60.

When the equations of motion represented by the equations (8) to (10) are solved by using an input-output formalism, equation (12) representing transduction efficiency $\eta$ is obtained. Optical susceptibility $\chi_\text{o}$, in the equation (12) is represented by equation (13), and $\delta\omega_\text{o}$ in the equation (13) is represented by equation (14).

[Math. 5]

$$\eta = \left|\frac{\langle \hat{b}_{\mathrm{out}}\rangle}{\langle \hat{a}_{\mathrm{in}}\rangle}\right|^2$$

$$= \left|\frac{\sqrt{\kappa_{\mathrm{e,e}}}\,\sqrt{\kappa_{\mathrm{o,e}}}\left(\frac{\zeta_\beta g_\beta}{\chi_\alpha} + \frac{\zeta_\alpha g_\alpha}{\chi_\beta} - i\zeta_\alpha g_\beta G_{\mathrm{mm}} - i\zeta_\beta g_\alpha G_{\mathrm{mm}}\right)}{\frac{\zeta_\beta^2}{\chi_\alpha \chi_{\mathrm{e}}} + \frac{\zeta_\alpha^2}{\chi_\beta \chi_{\mathrm{e}}} + \frac{G_{\mathrm{mm}}^2}{\chi_{\mathrm{e}}\chi_{\mathrm{o}}} - \frac{2i\zeta_\alpha \zeta_\beta G_{\mathrm{mm}}}{\chi_{\mathrm{e}}} + \frac{1}{\chi_\alpha \chi_\beta \chi_{\mathrm{e}} \chi_{\mathrm{o}}} + \zeta_\alpha^2 g_\beta^2 + \zeta_\beta^2 g_\alpha^2 - 2\zeta_\alpha \zeta_\beta g_\alpha g_\beta - \frac{2ig_\alpha g_\beta G_{\mathrm{mm}}}{\chi_{\mathrm{o}}} + \frac{g_\beta^2}{\chi_\alpha \chi_{\mathrm{o}}} + \frac{g_\alpha^2}{\chi_\beta \chi_{\mathrm{o}}}}\right|^2$$

$$(12)$$

$$\chi_{\mathrm{o}} = \left[i(\omega - \delta\omega_{\mathrm{o}}) - (\kappa_{\mathrm{o,e}} + \kappa_{\mathrm{o,i}})/2\right]^{-1} \qquad (13)$$

$$\delta\omega_{\mathrm{o}} = \Omega_0 - \omega_{\mathrm{o}} \qquad (14)$$

When resonance conditions are satisfied, that is, when the frequency $\omega$ of itinerant microwave photons, the resonant frequency $\omega_{\mathrm{e}}$ of the microwave resonator 30, the resonant frequency $\omega_\beta$ of the antiferromagnetic insulator, and $\delta\omega_{\mathrm{o}}$ are equal to one another, and the magnon-magnon interaction $G_{\mathrm{mm}}$ is 0, the transduction efficiency $\eta$ is represented by equation (15).
[Math. 6]

$$\eta = \left|\frac{\langle \hat{b}_{\mathrm{out}}\rangle}{\langle \hat{a}_{\mathrm{in}}\rangle}\right|^2$$

$$= \left|\frac{\sqrt{\kappa_{\mathrm{e,e}}}\,\sqrt{\kappa_{\mathrm{o,e}}}\left(\frac{\zeta_\beta g_\beta}{\chi_\alpha} + \frac{\zeta_\alpha g_\alpha}{\chi_\beta}\right)}{\frac{\zeta_\beta^2}{\chi_\alpha \chi_{\mathrm{e}}} + \frac{\zeta_\alpha^2}{\chi_\beta \chi_{\mathrm{e}}} + \frac{1}{\chi_\alpha \chi_\beta \chi_{\mathrm{e}} \chi_{\mathrm{o}}} + \zeta_\alpha^2 g_\beta^2 + \zeta_\beta^2 g_\alpha^2 - 2\zeta_\alpha \zeta_\beta g_\alpha g_\beta + \frac{g_\beta^2}{\chi_\alpha \chi_{\mathrm{o}}} + \frac{g_\alpha^2}{\chi_\beta \chi_{\mathrm{o}}}}\right|^2 \qquad (15)$$

For example, when $\zeta_\beta/2\pi$ is about $1.5 \times 10^{-3}$ MHz, $\gamma_\beta/2\pi$ is about 1,000 MHz, $\kappa_{\mathrm{o,i}}/2\pi$ and $\kappa_{\mathrm{o,e}}/2\pi$ are about 100 MHz, $g_\beta/2\pi$ is about 600 MHz, and $\kappa_{\mathrm{e,i}}/2\pi$ and $\kappa_{\mathrm{e,e}}/2\pi$ are about 300 MHz, the transduction efficiency $\eta$ is about $10^{-11}$. In this manner, the quantum transducer 300 can convert microwave photons of the microwave MW1 into optical photons.
According to the third embodiment, the same effects as in the first embodiment can be obtained.

(Fourth Embodiment)

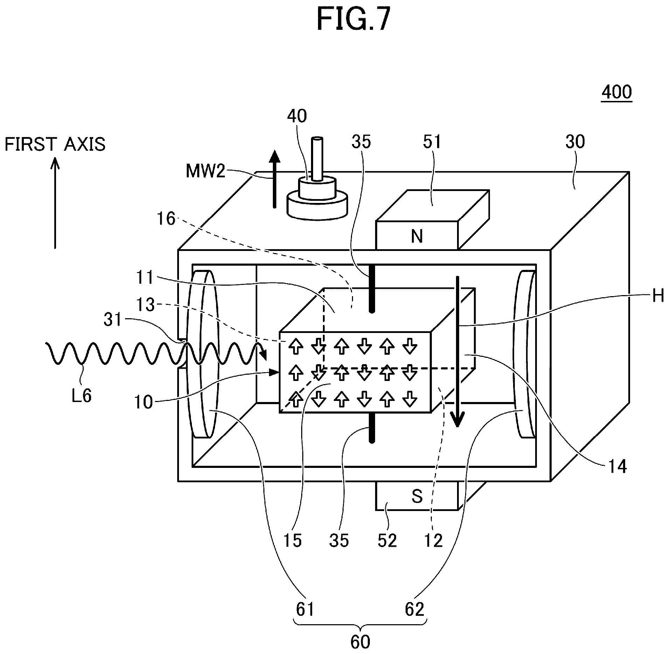

A fourth embodiment will be described. The fourth embodiment relates to a quantum transducer. The quantum transducer according to the fourth embodiment converts optical photons into microwave photons. FIG. 7 is a schematic view illustrating the quantum transducer according to the fourth embodiment.
As illustrated in FIG. 7, in a quantum transducer 400 according to the fourth embodiment, laser light L6 is emitted from the outside toward the object 10 through the inlet 31. The laser light L6 is emitted to the third surface 13 of the object 10. The outlet 32 is not necessarily provided. The laser light L6 includes linearly polarized laser light and circularly polarized laser light. The linearly polarized laser light and the circularly polarized laser light have components perpendicular to the easy axis of magnetization of the antiferromagnetic insulator included in the object 10. The optical resonator 60 amplifies the circularly polarized laser light.
The other configurations of the fourth embodiment are the same as those of the third embodiment.
In the fourth embodiment, a microwave MW2 corresponding to the polarization of the laser light L6 is emitted from the object 10, and the antenna 40 outputs the microwave MW2 to the outside. In this manner, optical photons of the laser light L6 emitted to the object 10 are converted into microwave photons of the microwave MW2. That is, a quantum transduction method using the quantum transducer 400 includes a process of emitting the laser light L6 to the object 10 from a direction inclined with respect to the first axis. For example, optical photons with a frequency of about 200 THz are converted into microwave photons with frequencies of about 1 GHz to 100 GHz.
According to the fourth embodiment, the same effects as in the third embodiment can be obtained.
The quantum transducers according to the present disclosure can be used for communication between superconducting qubits housed in a plurality of refrigerating machines, for example. However, the application of the quantum transducers according to the present disclosure is not limited to communication between superconducting qubits. Further, the quantum transducers can be used in quantum computing.

Although specific embodiments have been described above, the present invention is not limited to the above-described embodiments, and various modifications and substitutions can be made to the above-described embodiments without departing from the scope as defined in the claims.

**Claims**

1. A quantum transducer (100, 200, 300, 400) comprising:

   a three-dimensional cavity resonator (30);
   an object (10) disposed in the three-dimensional cavity resonator (30) and including an antiferromagnetic insulator having an easy axis of magnetization along a first axis; and
   a microwave transceiver (40) configured to transmit and receive a microwave to and from the object, wherein laser light is emitted to the object from a direction inclined with respect to the first axis.

2. The quantum transducer (100, 200, 300, 400) according to claim 1, wherein the laser light is emitted to the object (10) from a direction perpendicular to the first axis.

3. The quantum transducer (100, 200, 300, 400) according to claim 1, further comprising:
   a magnetic field applicator (51, 52) configured to apply, to the object, a magnetic field having a component parallel to the first axis.

4. The quantum transducer (100, 200, 300, 400) according to claim 1, further comprising:
   an optical resonator (60) disposed in the three-dimensional cavity resonator (30) and configured to resonate the laser light.

5. The quantum transducer (100, 200, 300, 400) according to claim 1, wherein the three-dimensional cavity resonator (30) includes an inlet (31) through which the laser light is introduced from outside.

6. The quantum transducer (100, 200, 300, 400) according to claim 5, wherein the three-dimensional cavity resonator (30) includes an outlet (32) through which the laser light transmitted through the object is guided to the outside.

7. The quantum transducer (100, 200, 300, 400) according to claim 1, wherein the three-dimensional cavity resonator (30) is a microwave resonator.

8. The quantum transducer (100, 200, 300, 400) according to claim 1, wherein the antiferromagnetic insulator includes $\alpha$-$Fe_2O_3$, $MnF_2$, $FeF_2$, NiO, or any combination thereof.

9. A quantum transduction method using a quantum transducer (100, 200, 300, 400) including

   a three-dimensional cavity resonator (30),
   an object (10) disposed in the three-dimensional cavity resonator (30) and including an antiferromagnetic insulator having an easy axis of magnetization along a first axis, and
   a microwave transceiver (40) configured to transmit and receive a microwave to and from the object, the quantum transduction method comprising:
   emitting laser light to the object from a direction inclined with respect to the first axis.

FIG.1

100

FIRST AXIS

MW1

40

51 N

30

35

H

L2

32

14

12

52 S

35

15

16

11

13

31

L1

10

# FIG.2

# FIG.3

# FIG.4

FIRST AXIS

MW2

L3

40  35  51  30  200

16  11  13  31  10  15  35

N  S

H  14  12  52

EP 4 693 116 A1

FIG.5

FIRST AXIS

MW1

300

30

51  N

52  S

40

35

35

H

L5

L4

31

32

14

12

62

60

61

15

10

11

13

16

## FIG.6

# FIG.7

FIRST AXIS

MW2

400

40
35
51
30

16

11
13
31
L6
10

N

H

15
35
52
12

14

61
62

60

EP 4 693 116 A1

15

Europäisches
Patentamt

European
Patent Office

Office européen
des brevets

# EUROPEAN SEARCH REPORT

**Application Number**

EP 25 18 7813

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | HAOWEI XU ET AL: "Efficient Quantum Transduction Using Anti-Ferromagnetic Topological Insulators", ARXIV.ORG, CORNELL UNIVERSITY LIBRARY, 201 OLIN LIBRARY CORNELL UNIVERSITY ITHACA, NY 14853, 17 August 2023 (2023-08-17), XP091844699, DOI: 10.1103/PHYSREVB.110.085136 * page 1 - page 13 * | 1-9 | INV. G06N10/40 |
| A | JONATHAN R EVERTS ET AL: "Microwave to optical photon conversion via fully concentrated rare-earth ion crystals", ARXIV.ORG, CORNELL UNIVERSITY LIBRARY, 201 OLIN LIBRARY CORNELL UNIVERSITY ITHACA, NY 14853, 8 December 2018 (2018-12-08), XP081377308, DOI: 10.1103/PHYSREVA.99.063830 * figure 1 * | 1-9 | |
| A | PARVINI T S ET AL: "Antiferromagnetic cavity optomagnonics", ARXIV.ORG, CORNELL UNIVERSITY LIBRARY, 201 OLIN LIBRARY CORNELL UNIVERSITY ITHACA, NY 14853, 16 August 2019 (2019-08-16), XP081624372, * abstract * | 1-9 | TECHNICAL FIELDS SEARCHED (IPC) G06N G02F H04B |
| A | AKIHIKO SEKINE ET AL: "Microwave-to-Optical Quantum Transduction Utilizing the Topological Faraday Effect of Topological Insulator Heterostructures", ARXIV.ORG, CORNELL UNIVERSITY LIBRARY, 201 OLIN LIBRARY CORNELL UNIVERSITY ITHACA, NY 14853, 29 July 2024 (2024-07-29), XP091828735, * page 1 - page 5; figures 1, 2, 5 * | 1-9 | |

The present search report has been drawn up for all claims

| Place of search | Date of completion of the search | Examiner |
|---|---|---|
| The Hague | 15 December 2025 | Bohn, Patrice |

EPO FORM 1503 03.82 (P04C01)

**REFERENCES CITED IN THE DESCRIPTION**

**Patent documents cited in the description**

- JP 2019512161 A
- JP 2022538247 A
- JP 2021536090 A
- US 20190019099